# EUROPÄISCHE PATENTANMELDUNG

(11) **EP 0 889 430 A2**
(43) Veröffentlichungstag der Anmeldung: **07.01.1999**
(21) Anmeldenummer: 98111812.8
(22) Anmeldetag: 26.06.1998
(51) Int. Cl.: G06K 7/12

(54) **Chipkartenlesegerät**

(30) Priorität: 03.07.1997 DE 19728359
(71) Anmelder: Secunet GmbH, 57076 Siegen (DE)
(72) Erfinder: Baumgart, Rainer, 57271 Hilchenbach (DE); Wolf, Oliver, 45219 Essen (DE)

(57) **Zusammenfassung**

Ein Chipkartenlesegerät (1) mit einer Schnittstelle (3) zu einer Datenübertragungsstrecke (4) zwecks Kommunikation mit einem System (5) versehen, welches ebenfalls eine Schnittstelle (6) zur Datenübertragungsstrecke (4) aufweist. Zur Reduzierung des Installationsaufwandes sind die Schnittstellen (3, 6) und die Datenübertragungsstrecke (4) für eine Kommunikation auf Basis von Infrarotsignalen eingerichtet.

## Beschreibung

Die Erfindung betrifft ein Chipkartenlesegerät mit einer Schnittstelle zu einer Datenübertragungsstrecke zwecks Kommunikation mit einem System, welches ebenfalls eine Schnittstelle zur Datenübertragungsstrecke aufweist.

Für den Informationsaustausch von Chipkarten mit anderen Systemen werden spezielle Lesegeräte benötigt. Bei aus der Praxis allgemein bekannten Chipkartenlesegeräten der obengenannten Art besteht die Datenübertragungsstrecke aus einer Leitung. Bei der Integration von Chipkartenlesegeräten in Gebäudeinfrastrukturen, wie sie beispielsweise für Zutrittskontrollanlagen notwendig sind, muß daher eine zusätzliche Verkabelung für die Kommunikation der Lesegeräte mit den Hintergrundsystemen erfolgen. Diese Verkabelung verursacht einen oftmals erheblichen Installationsaufwand und damit beachtliche Kosten.

Der Erfindung liegt das technische Problem zugrunde, den Installationsaufwand für Chipkartenlesegeräte der eingangs genannten Art zu reduzieren.

Hierzu lehrt die vorliegende Erfindung ein Chipkartenlesegerät der eingangs genannten Art, welches dadurch gekennzeichnet ist, daß die Schnittstellen und die Datenübertragungsstrecke für eine Kommunikation auf Basis von Infrarotsignalen eingerichtet sind.

Bei dem erfindungsgemäßen Chipkartenlesegerät kommunizieren mit anderen Worten die Chipkarten über eine Infrarot-Datenübertragungsstrecke mit anderen Systemen. Der durch die Erfindung erreichte Vorteil ist in dem wirtschaftlichen Einsatz von Chipkartenanwendungen in komplexen Gebäudestrukturen zu sehen, eben weil der sonst übliche zusätzliche Installationsaufwand entfällt.

Darüber hinaus kann das erfindungsgemäße Chipkartenlesegerät Eigenschaften bieten, die insbesondere folgende Funktionen bereitstellen: Kommunikation zwischen Chipkarte und Hostsystemen ohne feste, auf direkten Kontakten basierende Schnittstellen; mobiler Einsatz von Chipkarten, so daß ein Zugriff auf kontaktbehaftete Chipkarten ermöglicht wird, ohne daß diese Chipkarten selbst Sende- und Empfangseinrichtungen für drahtlose Kommunikation benötigen; Austauschbarkeit von Kommunikationsprotokollen zwischen Hostsystemen und Karten; gleichzeitige Kommunikation mehrerer Chipkarten mit einem System; Anwenderselbstbestimmung des Kommunikationszeitpunktes.

Im übrigen bestehen im Rahmen der Erfindung mehrere Möglichkeiten der weiteren Ausgestaltung. So ist eine besonders bevorzugte Ausführungsform durch eine netzunabhängige Stromversorgung gekennzeichnet. Ferner ist das Chipkartenlesegerät vorzugsweise für eine selbständige Kommunikation für eine Chipkarte und/oder für eine Ausführung eigenständiger Applikationen eingerichtet. In diesem Zusammenhang kann es sich auch empfehlen, eine zusätzliche Anzeigeeinheit und/oder Sicherheitseinrichtung vorzusehen, die unbefugte Gerätemanipulationen detektiert.

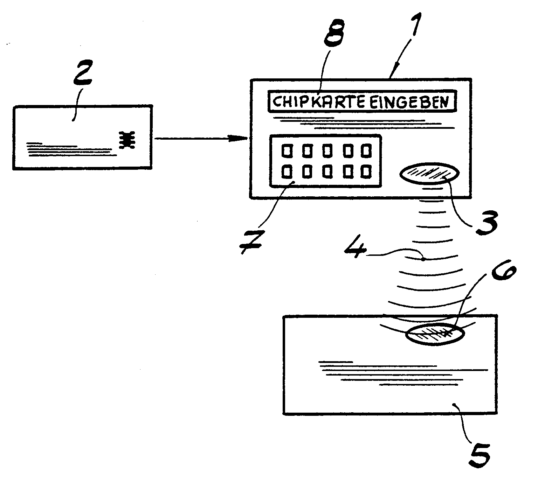

Im folgenden wird die Erfindung anhand einer Zeichnung erläutert, deren einzige Zeichnungsfigur ein Chipkartenlesegerät zeigt, welches in eine Systemkonfiguration eingebunden ist.

Das Chipkartengerät 1 ist im Ausführungsbeispiel für das Lesen einer Chipkarte 2 bekannter Bauart ausgelegt. Aufgrund der Systemarchitektur können aber auch andere Indentifikatoren, Sicherheitsmodule oder miniaturisierte Datenverarbeitungskomponenten, wie Magnetstreifenkarten, Disketten, Hand-Held-Computer oder Palmtops, eingesetzt werden. Das Chipkartenlesegerät 1 ist mit einer netzunabhängigen Stromversorgung und mit einer Schnittstelle 3 zu einer Datenübertragungsstrecke 4 zwecks Kommunikation mit einem System 5 versehen, welches ebenfalls eine Schnittstelle 6 zur Datenübertragungsstrecke 4 aufweist.

Im Ausführungsbeispiel sind die Schnittstellen 3, 6 und die Datenübertragungsstrecke 4 für eine Kommunikation auf Basis von Infrarotsignalen eingerichtet. In der Figur im einzelnen nicht dargestellt ist, daß das Chipkartenlesegerät 1 für eine selbständige Kommunikation mit einer Chipkarte 2 und für eine Ausführung eigenständiger Applikationen eingerichtet ist. Dargestellt ist aber, daß das Chipkartenlesegerät 1 eine zusätzliche Dateneingabeeinheit 7 und eine zusätzliche Anzeigeeinheit 8 aufweist. Integriert ist auch eine Sicherheitseinrichtung, die nicht zugelassene Gerätemanipulationen erkennt.

## Patentansprüche

1. Chipkartenlesegerät mit einer Schnittstelle zu einer Datenübertragungsstrecke zwecks Kommunikation mit einem System, welches ebenfalls eine Schnittstelle zur Datenübertragungsstrecke aufweist, **dadurch gekennzeichnet,** daß die Schnittstellen (3, 6) und die Datenübertragungsstrecke (4) für eine Kommunikation auf Basis von Infrarotsignalen eingerichtet sind.

2. Chipkartenlesegerät nach Anspruch 1, **gekennzeichnet durch** eine netzunabhängige Stromversorgung.

3. Chipkartenlesegerät nach den Anspruch 1 oder 2, **dadurch gekennzeichnet**, daß es zusätzlich für eine selbständige Kommunikation mit einer Chipkarte (1) eingerichtet ist.

4. Chipkartenlesegerät nach einem der Ansprüche 1 bis 3, **dadurch gekennzeichnet**, daß es für eine Ausführung eigenständiger Applikationen eingerichtet ist.

5. Chipkartenlesegerät nach einem der Ansprüche 1 bis 4, **gekennzeichnet durch** eine zusätzliche Dateneingabeeinheit (7).

6. Chipkartenlesegerät nach einem der Ansprüche 1 bis 5, **gekennzeichnet durch** eine zusätzliche Anzeigeneinheit (8).

7. Chipkartenlesegerät nach einem der Ansprüche 1 bis 6, **gekennzeichnet durch** eine Gerätemanipulationen detektierende Sicherheitseinrichtung.
